# EUROPEAN PATENT APPLICATION

(11) **EP 0 856 432 A2**
(43) Date of publication of application: **05.08.1998**
(21) Application number: 98101546.4
(22) Date of filing: 29.01.1998
(51) Int. Cl.: B60Q 1/52, B60R 16/02

(54) **Inside indicating device for a vehicle**

(30) Priority: 31.01.1997 IT TO970071
(71) Applicant: C.R.F. Societa' Consortile per Azioni, 10043 Orbassano (Torino) (IT)
(72) Inventor: Antonello, Pier Claudio, 10064 Pinerolo (IT); Ansaldi, Ermanno, 10100 Torino (IT); Burzio, Gianfranco, 10022 Carmagnola (IT)
(74) Representative: Jorio, Paolo

(57) **Abstract**

The indicating device has a pair of piezoelectric elements (20) fitted to the rim (35) of a steering wheel (13) at diametrically-opposed portions (35a, 35b) gripped by the driver of the vehicle; and a drive unit (22) for driving the piezoelectric elements (20). The piezoelectric elements (20) are bimorph ceramic plate elements of series or parallel type, each have a pair of terminals (21) connected to the drive unit (22), and, when activated, generate mechanical vibrations perceivable by touch and ear by the driver. The drive unit (22) driving the piezoelectric elements (20) generates a first and second alternating-voltage control signal (C1, C2), each of which is applied between a respective pair of terminals (21) of the piezoelectric elements (20), and has a frequency substantially equal to the resonance frequency of the respective piezoelectric element (20).

## Description

The present invention relates to an inside indicating device for a vehicle.

As is known, most currently used inside vehicle indicating devices are optical or acoustic.

Optical indicating devices comprise standard rear-lighted graphic symbols on the dashboard, each indicating a respective operating quantity of the vehicle.

The colours of rear-lighted graphic symbols and the contrast with the background colour of the dashboard, however, do not always enable the driver to see and interpret the relative indications clearly in different outside lighting conditions, as for example in strong sunlight, in variable lighting conditions, or when driving at night in heavy town or motorway traffic.

Similarly, a high noise level inside and/or outside the vehicle may prevent the driver from hearing the sound signal emitted by acoustic indicating devices.

Moreover, to see and interpret the information supplied by optical indicators, the driver's attention is inevitably distracted from the road, thus resulting in potentially hazardous driving situations.

For certain signals currently supplied optically or acoustically, and particularly those relating to the actual driving of the vehicle, increasing demand therefore exists for devices capable of providing the driver with signals perceivable clearly in any inside and/or outside lighting or noise conditions, and which distract the driver's attention from the road as little as possible.

It is an object of the present invention to provide a straightforward, reliable inside indicating device for a vehicle, which enables the driver to interpret the information supplied by the indicator in any inside and/or outside lighting or noise conditions.

According to the present invention, there is provided an inside indicating device for a vehicle, characterized by comprising touch indicating means.

A preferred, non-limiting embodiment of the present invention will be described by way of example with reference to the accompanying drawings, in which:
Figure 1 shows a block diagram of a first embodiment of an indicating device in accordance with the present invention, and which is applied to a vehicle steering wheel and connected to a device for monitoring and indicating operating conditions of the vehicle;
Figure 2 shows a flow chart of the operations performed by the Figure 1 indicating device;
Figures 3 and 4 show a second embodiment of the indicating device according to the present invention;
Figures 5 and 6 show a third embodiment of the indicating device according to the present invention.

The invention is based on the principle of employing mechanical-vibration generating elements located adjacent to the driver's seat, e.g. on the steering wheel of the vehicle, and generating mechanical vibrations perceivable by touch and ear by the driver while the vehicle is running, and which represent driver touch signals to which are assigned messages relating to operation of the vehicle or other vehicle-related situations.

The touch signals supplied by the mechanical-vibration generating elements may be used, for example, for driver-assist purposes, to prevent the vehicle from drifting off the road as a result of distraction or fatigue on the part of the driver, to which application the following description refers purely by way of example.

The touch signals may also be used, however, to alert the driver of vehicle operating conditions, such as speeding, or to indicate the vehicle is approaching a dangerous junction or traffic jam, if the vehicle is designed to cooperate with navigation systems indicating the road network location of the vehicle, maximum permissible speed, and road traffic conditions.

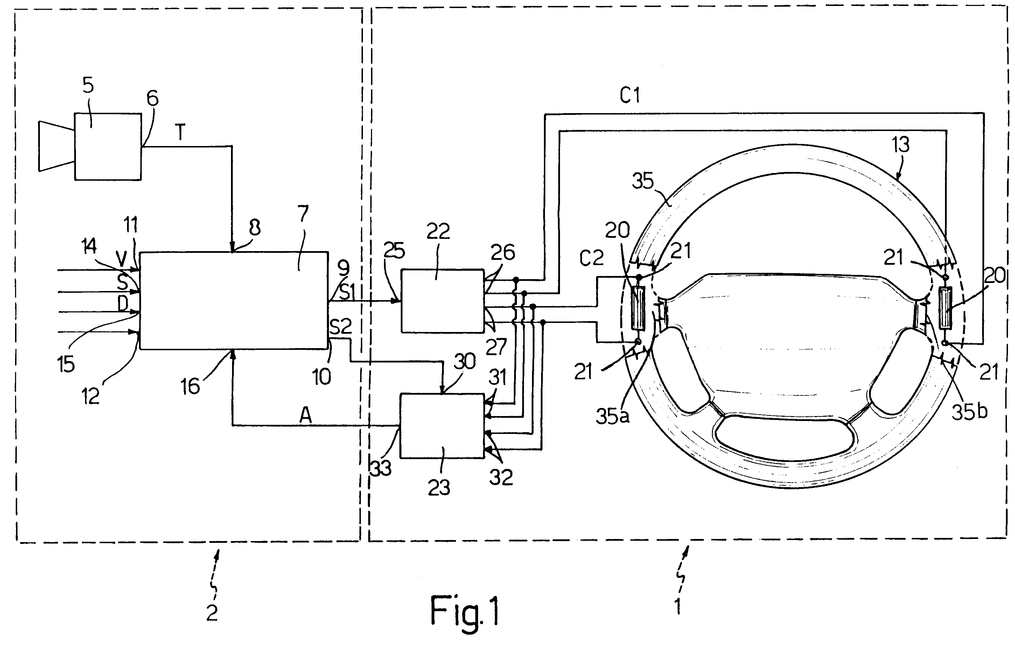

Number 1 in Figure 1 indicates as a whole an indicating device according to a first embodiment of the present invention and connected to a device 2 for monitoring and indicating operating conditions of the vehicle (not shown).

The monitoring and indicating device 2 comprises a television camera 5 housed in a front portion of the vehicle and generating, at an output terminal 6, a television signal T relative to the road scene ahead of the vehicle; and a processing unit 7 for controlling indicating device 1, and having a first input terminal 8 connected to output terminal 6 of camera 5, and a first and a second output terminals 9, 10 connected to indicating device 1.

Processing unit 7 also receives, at a second input terminal 11, a speed signal V correlated with the speed of the vehicle; at a third input terminal 12, a position signal Φ correlated with the angular position of the steering wheel 13 of the vehicle; and, at a fourth and fifth input terminal 14, 15, respective first and second direction signals S, D respectively indicating operation of the left and right direction indicators (not shown) of the vehicle.

Processing unit 7 also receives, at a sixth input terminal 16, an alarm signal A generated by indicating device 1 as described in detail later on, and, on the basis of speed signal V, position signal Φ and direction signals S, D, generates a first enabling signal S1 at the first output terminal 9, and a second enabling signal S2 at the second output terminal 10, both of which signals are supplied to indicating device 1.

Indicating device 1 comprises a pair of piezoelectric actuating elements 20 - hereinafter referred to as "piezoelectric elements" - located on steering wheel 13 of the vehicle, and each having a pair of connecting terminals 21; a drive unit 22 for driving piezoelectric elements 20 and enabled by processing unit 7; and a monitoring unit 23 for monitoring operation of piezoelectric elements 20 and also enabled by processing unit 7 as described in detail later on.

More specifically, drive unit 22 has a control terminal 25 connected to first output terminal 9 of processing unit 7, and for receiving first enabling signal S1 generated by processing unit 7; and a first and second pair of output terminals 26, 27, each connected to a respective pair of terminals 21 of a respective piezoelectric element 20.

Monitoring unit 23 has a control terminal 30 connected to second output terminal 10 of processing unit 7, and for receiving second enabling signal S2 generated by processing unit 7; a first and second pair of input terminals 31, 32, each connected to a respective pair of terminals 21 of a respective piezoelectric element 20; and an output terminal 33 connected to sixth input terminal 16 of processing unit 7.

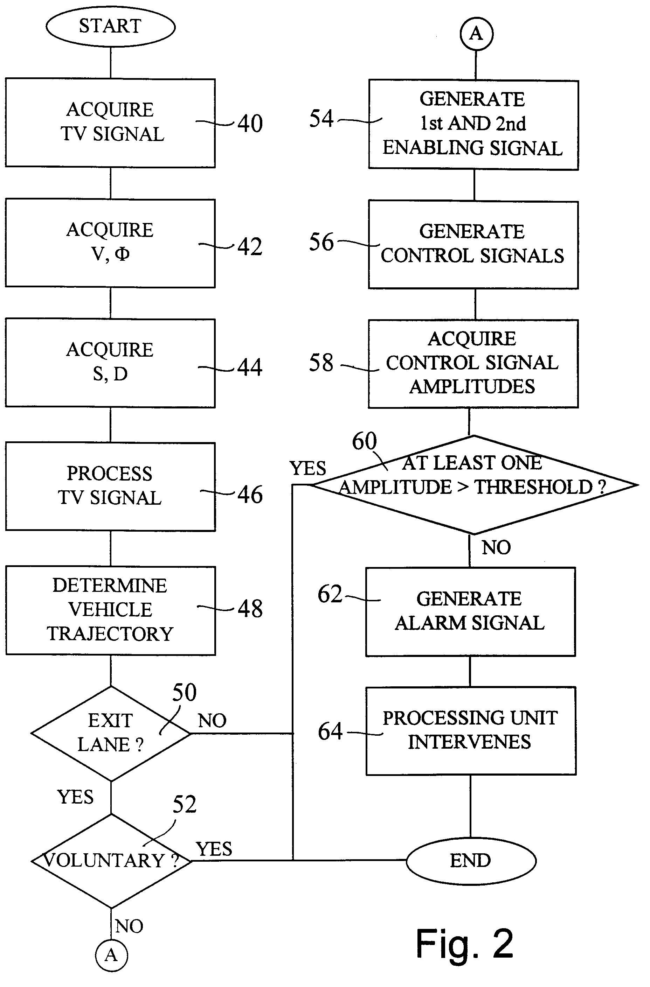

More specifically, drive unit 22, when enabled, provides for activating piezoelectric elements 20, while monitoring unit 23 provides for generating alarm signal A at output terminal 33, in the event the driver's hands are not placed correctly on the portions of steering wheel 13 housing piezoelectric elements 20, by performing the operations described in detail later on with reference to Figure 2.

In a preferred embodiment, piezoelectric elements 20 are located, as shown in Figure 1, in the rim 35 of steering wheel 13, in particular, in diametrically-opposed portions 35a, 35b of rim 35 normally gripped by the driver; and each piezoelectric element 20 is conveniently concealed beneath the outer covering of respective portion 35a, 35b of rim 35.

Operation of piezoelectric elements 20 is based on the known piezoelectricity phenomenon, which occurs in crystals with an asymmetrically structured lattice, and whereby the crystals are polarized electrically when subjected to mechanical stress (direct piezoelectric effect) and are distorted when placed in an electric field (inverse piezoelectric effect).

More specifically, depending on the polarity of the electric field applied to them, such crystals expand or contract, so that, when subjected to an alternating potential difference, piezoelectric crystals generate mechanical vibration as a result of expansion and contraction of the crystal lattice.

If the alternating potential difference applied to the crystal is of an appropriate so-called resonance frequency, maximum electric to mechanical energy conversion is achieved. The resonance frequency of a piezoelectric crystal is defined by the characteristic elastic vibration frequency of the ceramic material of which it is formed, and depends, among other things, on the form of the crystal.

According to the present invention, piezoelectric elements 20 are bimorph ceramic plate elements of series or parallel type, are 35 mm x 12 mm x 0.6 mm in size, have a resonance frequency of about 250 Hz, and a maximum mechanical oscillation deflection of about 1 mm.

Piezoelectric elements 20 of the above type were chosen for their resonance frequency, which is that to which the skin of the hand is most sensitive, and which falls within the human hearing range. At such a resonance frequency, in fact, the hand is capable of detecting mechanical vibrations with mechanical oscillation deflections of at least 0.6 *m, and the mechanical vibrations generated by piezoelectric elements 20 are also perceivable by ear.

Drive unit 22 controls each piezoelectric element 20 by supplying between connecting terminals 21 a respective alternating control signal C1, C2 of appropriate amplitude and a frequency equal or close to the resonance frequency of piezoelectric element 20. More specifically, the control signal C1, C2 of each piezoelectric element 20 is preferably a square-wave voltage signal, though laboratory tests have shown that, as regards feeling and hearing the mechanical vibrations generated by the piezoelectric elements, substantially the same results are obtained using sinusoidal, pulsated or triangular-wave signals.

The same laboratory tests have also shown good tactile and auditory response by supplying each piezoelectric element 20 with a square-wave control signal C1, C2 of, not only a frequency equal to or close to the resonance frequency of piezoelectric element 20, but also an amplitude of about 100 Vpp (peak-to-peak volts).

The touch and audio signal supplied to the driver depends largely on how steering wheel 13 is gripped, and the combined touch-audio effect is regulated by the placement of the driver's hands on steering wheel 13.

That is to say, if the driver grips rim 35 of steering wheel 13 at portions 35a, 35b housing piezoelectric elements 20, the mechanical vibrations generated by the piezoelectric elements are felt clearly by the driver, whereas the sound produced by the piezoelectric elements is noticeably reduced and only perceived to a limited extent by the driver when the vehicle is running.

Conversely, if the driver grips portions of rim 35 of steering wheel 13 other than those housing piezoelectric elements 20, the sound produced by the piezoelectric elements is not reduced and is clearly perceivable by the driver, whereas the mechanical vibrations on the driver's hands are noticeably reduced and therefore barely felt by the driver.

Moreover, the characteristics of piezoelectric elements 20 described above are such that, if rim 35 of steering wheel 13 is gripped correctly at portions 35a, 35b housing piezoelectric elements 20, i.e. if said portions are subjected by the driver to compression typical of that applied when driving the vehicle, the peak-to-peak amplitude of control signal C1, C2 between terminals 21 of each piezoelectric element 20 assumes a given value, whereas, if rim 35 of steering wheel 13 is not gripped correctly at portions 35a, 35b housing piezoelectric elements 20, i.e. if said portions are not subjected to such compression, the peak-to-peak amplitude of control signal C1, C2 between terminals 21 of each piezoelectric element 20 assumes a different value from the previous one.

More specifically, using piezoelectric elements 20 of the type described above, the amplitude of control signal C1, C2 between terminals 21 of piezoelectric elements 20, when steering wheel 13 is gripped correctly by the driver, is about 2-3% higher than the amplitude detected when steering wheel 13 is not gripped correctly; which variation in amplitude is due to a variation in the impedance of piezoelectric elements 20 when compressed by the driver.

As stated, the way in which steering wheel 13 is gripped is determined by monitoring unit 23, which acquires the control signals C1, C2 supplied to piezoelectric elements 20, and determines whether steering wheel 13 is gripped correctly or not by the driver by performing the operations described below with reference to the Figure 2 flow chart.

Operation of indicating device 1 will now be described with reference to the Figure 2 flow chart, which shows the operations performed by processing unit 7 and monitoring unit 23.

As shown in Figure 2, processing unit 7 first acquires the television signal T generated by camera 5 and relative to the road scene ahead of the vehicle (block 40).

Processing unit 7 then acquires speed signal V indicating the speed of the vehicle, and position signal Φ indicating the angular position of steering wheel 13 (block 42).

Processing unit 7 then acquires direction signals S, D respectively indicating operation of the left and right direction indicators of the vehicle (block 44).

Processing unit 7 then processes television signal T by means of known image processing techniques not described in detail, and determines the geometry of the road ahead of the vehicle, which is defined by the traffic lane and by the position of the vehicle within the lane (block 46).

On the basis of speed and position signals V and Φ, processing unit 7 then determines the trajectory of the vehicle (block 48).

At this point, processing unit 7 compares the vehicle trajectory determined in block 48 with the geometry of the road determined in block 46, to determine whether or not the vehicle is about to move out of the lane (block 50).

If the vehicle is not moving out of the lane (NO output of block 50), the operation sequence terminates and starts again from the operation described with reference to block 40. Conversely, if the vehicle is moving out of the lane (YES output of block 50), processing unit 7 determines, on the basis of direction signals S, D, whether the move is voluntary, i.e. controlled by the driver (block 52).

In particular, in block 52, processing unit 7 determines whether the move is voluntary by determining activation by the driver of the direction indicator corresponding to the direction in which the vehicle is moving out of the lane.

If the appropriate direction indicator has been activated by the driver (YES output of block 52), this means the move is voluntary, so that the operation sequence terminates and starts again from the operation described with reference to block 40. Conversely, if the appropriate direction indicator has not been activated by the driver (NO output of block 52), this means the move is involuntary, e.g. due to distraction or fatigue on the part of the driver, so processing unit 7 generates first and second enabling signals S1, S2, which are supplied respectively to drive unit 22 and monitoring unit 23 (block 54).

On receiving first enabling signal S1, drive unit 22 generates control signals C1, C2 of the type described above for piezoelectric elements 20 (block 56).

As a result, piezoelectric elements 20 generate mechanical vibrations perceivable by touch and ear by the driver, who is thus alerted that the vehicle is about to move out of the lane.

At the same time, on receiving second enabling signal S2, monitoring unit 23 acquires the control signals C1, C2 supplied to terminals 21 of piezoelectric elements 20 (block 58).

Monitoring unit 23 then compares the amplitude of each control signal C1, C2 with a predetermined threshold value Cₜₕ representing the amplitude which the control signal would have if no compression were exerted on the piezoelectric elements, i.e. if steering wheel 13 were not gripped correctly by the driver at portions 35a, 35b of rim 35 housing piezoelectric elements 20 (block 60).

If the amplitudes of both control signals C1, C2 fall within a tolerance window centered about the predetermined threshold value Cₜₕ (NO output of block 60), this means the driver is not gripping steering wheel 13 correctly, so monitoring unit 23 generates alarm signal A (block 62). Conversely, if the amplitude of at least one of control signals C1, C2 is greater than predetermined threshold value Cₜₕ and outside said tolerance window (YES output of block 60), this means the driver is gripping correctly at least one of portions 35a, 35b of rim 35 of steering wheel 13 housing piezoelectric elements 20, so no alarm signal A for processing unit 7 is generated by monitoring unit 23.

As incorrect gripping of steering wheel 13 as indicated by alarm signal A may be due to distraction, fatigue, drowsiness or indisposition on the part of the driver, processing unit 7, on receiving the alarm signal, intervenes, for example, by increasing the intensity of the acoustic signal generated by piezoelectric elements 20, or by enabling special automatic control devices on the vehicle (block 64).

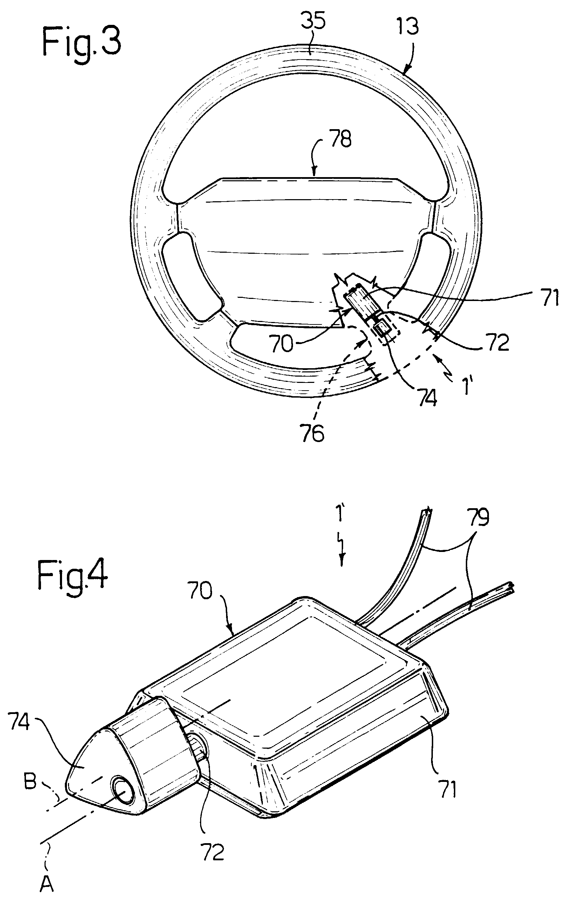

Figures 3 and 4 show a second embodiment of the indicating device according to the present invention.

As shown, the indicating device - in this case indicated 1' - differs from indicating device 1 by piezoelectric elements 20 being replaced by an actuator 70 comprising a motor 71, which has an output shaft 72, of axis A, carrying an eccentric mass 74, preferably of heavy metal, i.e. a mass so connected to output shaft 72 that the center of gravity of the mass is located along an axis B parallel to axis A of output shaft 72.

Motor 71 may, for example, be of the type used for powering vehicle rearview mirrors, and is preferably fitted to the metal part of one of the spokes 76 of steering wheel 13 joining the central housing 78 to rim 35, leaving enough room for eccentric mass 74 to rotate freely.

Motor 71 has a pair of terminals 79 connected to output terminals 26 of drive unit 22, and is driven by drive unit 22 with the consent of processing unit 7.

On receiving enabling signal S1 generated by processing unit 7, drive unit 22 generates between output terminals 26 a direct-voltage control signal C1, in particular, a control signal C1 defined by a direct voltage equal to the voltage supplied by the vehicle battery (not shown).

When control signal C1 is supplied between terminals 79 of motor 71, i.e. when motor 71 is supplied with the battery voltage, motor 71 is activated and eccentric mass 74 is rotated to produce an intense vibration, which is transmitted via spoke 76 to rim 35 of steering wheel 13 and is felt clearly by the driver gripping steering wheel 13, regardless of which portion of rim 35 is gripped.

Indicating device 1' also differs from device 1 by comprising no monitoring unit 23, and therefore dispensing with the operations, described with reference to blocks 60-64 in Figure 2, for determining correct gripping of steering wheel 13.

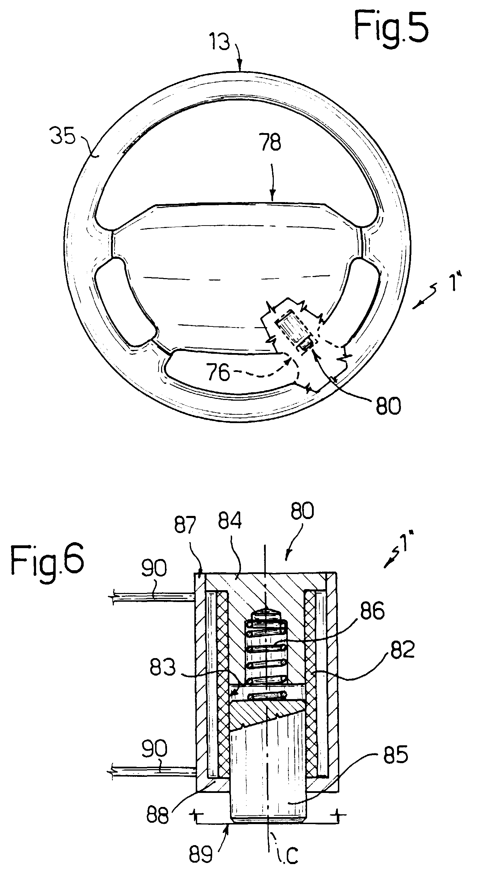

Figures 5 and 6 show a third embodiment of the indicating device according to the present invention.

As shown, the indicating device - in this case indicated 1'' - differs from indicating device 1 by piezoelectric elements 20 being replaced by an actuator 80 comprising a solenoid 82, which has a cavity 83, of axis C, closed at one end by a closing element 84 inserted partly inside cavity 83; a piston 85 made of ferromagnetic material and housed in axially-sliding manner in the remaining part of cavity 83; and an expulsion spring 86 interposed between closing element 84 and piston 85.

Solenoid 82 is housed inside a substantially cup-shaped supporting structure 87 having a bottom wall 88 with a central hole through which piston 85 extends.

Actuator 80 is preferably fitted to one of the spokes 76 of steering wheel 13 joining the central housing 78 to rim 35, and piston 85 is normally maintained by expulsion spring 86 in a partially extracted position with respect to cavity 83 and supporting structure 87, and in which piston 85 projects partially from cavity 83 and rests on a stop element 89 (e.g. a wall) outside supporting structure 87.

Solenoid 82 has a pair of terminals 90 connected to output terminals 26 of drive unit 22, and is driven by drive unit 22 with the consent of processing unit 7.

On receiving enabling signal S1 generated by processing unit 7, drive unit 22 generates between output terminals 26 an alternating-voltage control signal C1, in particular, a control signal C1 defined by a train of pulses of appropriate amplitude and frequency.

For example, alternating-voltage control signal C1 may have an amplitude varying between a positive value (12 V) and zero, and a frequency of about 100 Hz.

When control signal C1 is supplied between terminals 90 of solenoid 82, an alternating magnetic field is generated in solenoid 82 to move piston 85 back and forth.

The intensity of the alternating magnetic field in the solenoid is such that piston 85 is alternately drawn inside solenoid 82, thus compressing expulsion spring 86, and then pushed out of solenoid 82 by expulsion spring 86 to project partly from supporting structure 87 and contact stop element 89.

The movement of piston 85 therefore produces an intense vibration, which is transmitted via spoke 76 to rim 35 of steering wheel 13 and is felt clearly by the driver gripping steering wheel 13, regardless of which portion of rim 35 is gripped.

Indicating device 1'' also differs from device 1 by comprising no monitoring unit 23, and therefore dispensing with the operations, described with reference to blocks 60-64 in Figure 2, for determining correct gripping of steering wheel 13.

The advantages of indicating device 1, 1', 1'' will be clear from the foregoing description.

In particular, indicating device 1, 1', 1'' provides for creating a new, combined tactile-acoustic channel of communication with the driver, and for supplying the driver with tactile information perceivable in any inside and/or outside lighting or noise conditions.

Moreover, indicating device 1, 1', 1'' is reliable, easy to implement, and involves only minor changes to the vehicle.

Clearly, changes may be made to indicating device 1, 1', 1'' as described and illustrated herein without, however, departing from the scope of the present invention.

For example, the number of piezoelectric elements 20 in each portion 35a, 35b of rim 35 of steering wheel 13 may be other than as described, and each portion 35a, 35b may be fitted with a number of piezoelectric elements 20 to cover a larger portion of rim 35.

Piezoelectric elements 20 may be replaced by a single annular piezoelectric element extending about the whole of rim 35 to supply the driver with touch signals regardless of the position of the driver's hands on steering wheel 13.

In which case, drive unit 22 only generates a first control signal C1; and monitoring unit 23, when enabled, only acquires first control signal C1, compares first control signal C1 with predetermined threshold value Cₜₕ, and determines correct grip of steering wheel 13 when the amplitude of first control signal C1 is greater than threshold value Cₜₕ and outside said tolerance window centered about threshold value Cₜₕ, and incorrect grip of steering wheel 13 when the amplitude of first control signal C1 falls within the tolerance window.

Moreover, drive unit 22 and monitoring unit 23 may be dispensed with and the respective functions performed directly by processing unit 7.

Piezoelectric elements 20 may be located in positions other than those described, and in particular in any position on the vehicle, adjacent to the driver's seat, in which the mechanical vibrations generated by them are perceivable by the driver by touch and ear, e.g. on the driver's seat (both the seat portion and backrest) or on the vehicle control pedals (accelerator, brake, clutch).

Finally, the vibration frequency of the mechanical vibrations generated by piezoelectric elements 20 may be below the range of human hearing; and the amplitude and frequency of control signals C1 and C2 may be other than as described, and be correlated, for example, to the desired intensity of the vibrations to be transmitted to the driver.

## Claims

1. An inside indicating device for a vehicle, characterized by comprising touch indicating means (20, 22, 23; 70; 80).

2. A device as claimed in Claim 1, characterized in that said touch indicating means (20, 22, 23; 70; 80) comprise mechanical-vibration generating means (20; 70; 80) for generating mechanical vibrations and fittable to the vehicle in a position adjacent to a driver's seat of the vehicle; and control means (22, 23; 22) for controlling said mechanical-vibration generating means (20; 70; 80).

3. A device as claimed in Claim 2, characterized in that said mechanical-vibration generating means comprise at least a first actuating element (20; 70; 80).

4. A device as claimed in Claim 3, characterized in that said first actuating element (20; 70; 80) is fittable to a steering wheel (13) of the vehicle.

5. A device as claimed in Claim 4, characterized in that said first actuating element (20) is fittable inside a rim (35) of said steering wheel (13).

6. A device as claimed in any one of the foregoing Claims from 3 to 5, characterized in that said first actuating element is a piezoelectric actuating element (20).

7. A device as claimed in Claim 6, characterized in that said first piezoelectric actuating element (20) is a bimorph ceramic plate element of a series or parallel type.

8. A device as claimed in any one of the foregoing Claims from 2 to 7, characterized in that said mechanical-vibration generating means (20) have a vibration frequency in and below the range of human hearing.

9. A device as claimed in Claim 6 or 7, characterized in that said first piezoelectric actuating element (20) has a pair of terminals (21) connected to said control means (22, 23); and in that said control means (22, 23) comprise first drive means (22) for driving said first piezoelectric actuating element (20), and which receive a first enabling signal (S1) and generate at least an alternating-voltage first control signal (C1, C2) which is applied between said pair of terminals (21) of said first piezoelectric actuating element (20); said first control signal (C1, C2) having an amplitude and frequency correlated to a desired intensity of said mechanical vibrations.

10. A device as claimed in Claim 9, characterized in that said frequency of said first control signal (C1, C2) is substantially equal to the resonance frequency of said first piezoelectric actuating element (20).

11. A device as claimed in Claim 9 or 10, characterized in that said control means (22, 23) comprise monitoring means (23) having first input means (30) receiving a second enabling signal (S2), and second input means (31, 32) connected to said pair of terminals (21) of said first piezoelectric actuating element (20); said monitoring means (23) generating an alarm signal (A) indicating incorrect gripping of said steering wheel (13).

12. A device as claimed in Claim 11, characterized in that said monitoring means (23) comprise acquisition means (58) for acquiring said first control signal (C1, C2) applied between said pair of terminals (21) of said first piezoelectric actuating element (20); comparing means (60) connected to said acquisition means (58); and signal generating means (62) connected to said comparing means (60) and enabled by the comparing means (60) to generate said alarm signal (A) in the event of a predetermined relationship between said first control signal (C1, C2) and a predetermined threshold value (Cₜₕ).

13. A device as claimed in any one of the foregoing Claims from 3 to 12, characterized in that said mechanical-vibration generating means comprise a second actuating element (20); said first and second actuating elements (20) being fittable to diametrically-opposed portions (35a, 35b) of said rim (35) of the steering wheel (13).

14. A device as claimed in Claim 13, characterized in that said second actuating element is a piezoelectric actuating element (20).

15. A device as claimed in Claim 14, characterized in that said second piezoelectric actuating element (20) is a bimorph ceramic plate element of a series or parallel type.

16. A device as claimed in Claim 3 or 4, characterized in that said first actuating element (70) comprises a motor (71) having an output shaft (72) carrying an eccentric mass (74).

17. A device as claimed in Claim 16, characterized in that said first actuating element (70) is fitted to a spoke (76) of said steering wheel (13).

18. A device as claimed in Claim 16 or 17, characterized in that said motor (71) has a pair of terminals (79) connected to said control means (22); and in that said control means (22) comprise second drive means (22) for driving said motor (71), and which receive a third enabling signal (S1) and generate a direct-voltage second control signal (C1) which is applied between said pair of terminals (79) of said motor (71).

19. A device as claimed in Claim 3 or 4, characterized in that said first actuating element (80) comprises a solenoid (82) having a cavity (83) in turn having a longitudinal axis (C) and closed at one end by a closing element (84) partially inserted inside the cavity (83); a piston (85) made of ferromagnetic material and housed in axially-sliding manner in the remaining part of said cavity (83); and an expulsion spring (86) interposed between said closing element (84) and said piston (85), and for normally maintaining the piston (85), with respect to the cavity (83), in a partially extracted position wherein the piston (85) projects partially from said cavity (83) and contacts a stop element (89) outside the cavity (83).

20. A device as claimed in Claim 19, characterized in that said first actuating element (80) is fitted to a spoke (76) of said steering wheel (13).

21. A device as claimed in Claim 19 or 20, characterized in that said solenoid (82) has a pair of terminals (90) connected to said control means (22); and in that said control means comprise third drive means (22) for driving said solenoid (82), and which receive a fourth enabling signal (S1) and generate an alternating-voltage third control signal (C1) which is applied between said pair of terminals (90) of said solenoid (82); said third control signal (C1) having an amplitude and frequency correlated with a desired intensity of said mechanical vibrations.
